# EUROPÄISCHE PATENTANMELDUNG

(11) **EP 4 757 140 A1**
(43) Veröffentlichungstag der Anmeldung: **10.06.2026**
(21) Anmeldenummer: 24217148.6
(22) Anmeldetag: 03.12.2024
(51) Int. Cl.: H02K 11/33, H02K 5/15, H02K 5/16, H02K 5/22

(54) **ANSCHLUSSRING FÜR EINE GEHÄUSEINTEGRIERTE UMRICHTEREINHEIT**

(71) Anmelder: Innomotics GmbH, 90441 Nürnberg (DE)
(72) Erfinder: Deeg, Christian, 90518 Altdorf (DE); Jordan, Philipp, 96114 Hirschaid (DE); Katzenberger, Tobias, 97631 Bad Königshofen STT Untereßfeld (DE); Lehner, Johannes, 90762 Fürth (DE); Steinmüller, Marco, 97638 Mellrichstadt (DE); Tischmacher, Hans, 91207 Lauf (DE); Warmuth, Matthias, 97618 Windshausen (DE)
(74) Vertreter: Michalski Hüttermann & Partner mbB

(57) **Zusammenfassung**

Vorgeschlagen wird eine elektrische Maschine (10), insbesondere eine Drehstromasynchron- oder eine Drehstromsynchronmaschine, und ein Verfahren zur Montage einer elektrischen Maschine (10). Diese Maschine umfasst einen Stator (2) mit Wicklungsleitungen (22), deren Leitungsenden in Steckkontaktiereinheiten (12) münden, die in einem Anschlussring (1) fixiert sind. Darüber hinaus beinhaltet die Maschine eine gehäuseintegrierte Umrichtereinheit (3), insbesondere eine im Lagerschild integrierte Umrichtereinheit (3), die entsprechende Steckkontaktiergegenstücke (13) aufweist. Es wird ein Herstellungsverfahren für diese elektrische Maschine (10) angegeben, in dem zunächst die Leitungsenden der Wicklungsleitungen (22) des Stators (2) an die Steckkontaktiereinheiten (12) angebracht werden und diese wiederum im Anschlussring (1) fixiert werden. Anschließend wird der Stator (2) mit dem Anschlussring (1) axial in das Gehäuse (5) eingefügt oder eingepresst. Alternativ werden die Steckkontaktiereinheiten (12) nach dem Einfügen oder Einpressen des Anschlussrings (1) an diesen angebracht. Danach wird die Umrichtereinheit (3) mit den Steckkontaktiergegenstücken (13) axial in das Gehäuse (5) eingeschoben, bis eine Endposition erreicht ist, in der die Steckkontaktiereinheiten (12) und die Steckkontaktiergegenstücke (13) so zusammengefügt sind, dass der Stator (2) und die Umrichtereinheit (3) kontaktiert sind.

## Beschreibung

Die vorliegende Erfindung betrifft eine elektrische Maschine, insbesondere eine Drehstromasynchron- oder eine Drehstromsynchronmaschine, und ein Verfahren zur Montage einer elektrischen Maschine.

### Stand der Technik

Bisher wird die Statorwicklung einer elektrischen Maschine, wie Drehstromasynchron- und Drehstromsynchronmotoren, durch verschiedene Kontaktierungsmethoden wie Crimpen, Löten oder Schweißen mit Anschlussleitungen verbunden, die typischerweise Kabelschuhe an den Enden haben. Diese Anschlussleitungen werden zur Kontaktierung mit der notwendigen Spannungsversorgung manuell durch eine Gehäuseöffnung zu einem Klemmenbrett im Anschlusskasten geführt.

Für drehzahlveränderbare dynamoelektrische Maschinen, wie Elektromotoren, vor allem Synchron-, Asynchron-, und Reluktanzmotoren werden Frequenzumrichter zum Einstellen der gewünschten Drehzahl benötigt.

Bei dezentralen, insbesondere wandmontierten Umrichter-Ausführungen in Schaltschränken, erfolgt die Verbindung zwischen Umrichter und Motor über eine separate Zuleitung zum Klemmenbrett, während bei sogenannten integrierten Umrichter-Ausführungen die Anschlussleitungen direkt durch die Gehäuseöffnung zum Umrichter geführt werden. Bei diesen bisher im Stand der Technik als integrierte Umrichter bezeichneten Lösungen sind die Umrichtereinheiten auf eine Gehäuseöffnung der elektrischen Maschine aufgesetzt. Alternativ wird von motormontierten Umrichtern gesprochen. Auch hier werden die Anschlussleitungen zumeist manuell herausgeführt. Diese Vorgehensweise führt zu hohen Montagekosten, insbesondere bei kleineren Baugrößen, und beeinträchtigt die Kompaktheit des Antriebssystems.

Zusätzliche Leitungen für thermische Überwachung oder andere Einbauteile werden ebenso manuell durch die Gehäuseöffnung geführt, was den manuellen Aufwand noch weiter erhöht. Diese Methoden erfordern die Verwendung von Aderendhülsen und die Kontaktierung mittels Lüsterklemmen oder Cage-Clamp-Kontakten, was ebenfalls die Komplexität und die Kosten erhöht.

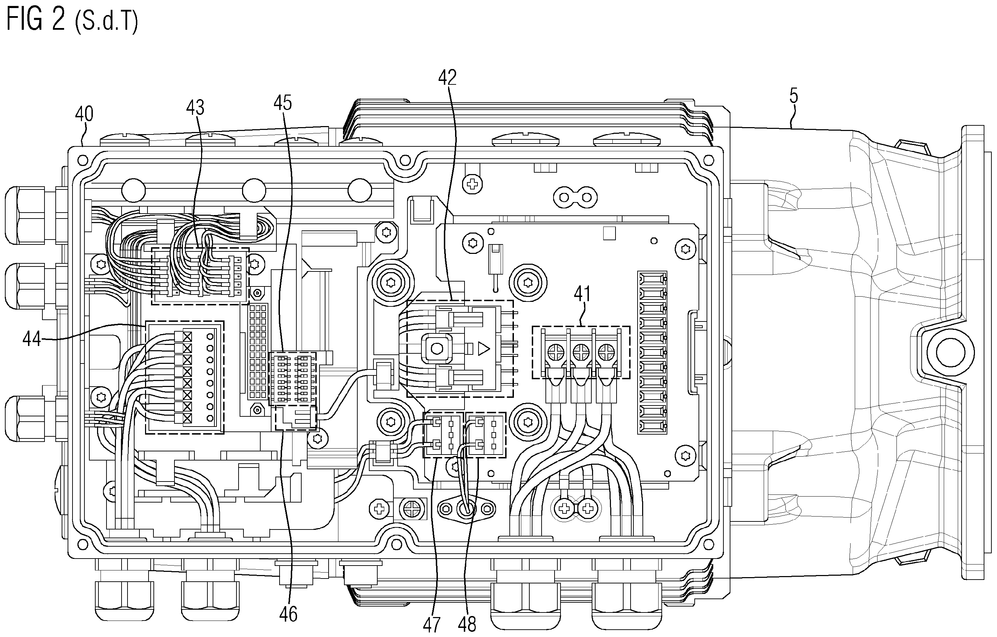

Bisher, wie beispielsweise in Figur 2 illustriert, erfolgt also die Kontaktierung der Energieleitung, der Signalleitungen und der Umrichteranschlüsse auf einem Klemmbrett im Klemmenkasten am Motorgehäuse. Diese Ausführung der Montage direkt am Gehäuse benötigt viel Bauraum und macht den Antrieb vergleichsweise groß und schwer.

Die bestehenden Lösungen schränken des Weiteren die Modularität und Austauschbarkeit der Antriebssysteme ein und führen zu einem erhöhten Platzbedarf und manuellen Arbeitsaufwand beim Anschluss der Komponenten. Ein weiterer Nachteil der bestehenden Methoden ist die Notwendigkeit, jede Komponente einzeln zu verbinden, was sowohl zeitaufwendig als auch anfällig für Fehler ist. Alternativmaterialien oder alternative Designs für die Kontaktierung wurden bislang kaum genutzt, da die bestehenden Methoden auf Industriestandards und etablierten Praktiken basieren.

Ansätze, bei denen Motor und Umrichter axial hintereinander angeordnet werden, sind beispielsweise aus der EP 0 854 560 A1 bekannt. Bisher jedoch benötigen Ausführungen von Umrichtern direkt am Motor viel Bauraum, da das Lager zwischen Motor und Umrichter ist. Dies macht den Antrieb vergleichsweise groß und schwer.

Aus der DE 10 2004 031 399 A1 beispielsweise ist ein Umrichtermotor mit einem eigenbelüfteten Elektromotor und einem Frequenzumrichter bekannt, wobei in einem topfförmigen Lagerschild Bauteile des Frequenzumrichters am Boden des topfförmigen Lagerschildes angeordnet sind. Auch dieser Antrieb benötigt vergleichsweise viel Bauraum.

Folglich stellt es sich als technisch erforderlich dar, eine verbesserte Lösung vorzuschlagen, welche die aus dem Stand der Technik bekannten Nachteile vermeidet. Insbesondere soll die vorzuschlagende Lösung eine erhöhte Kompaktheit bei gleichzeitig vereinfachter Montage ermöglichen.

Diese der vorliegenden Erfindung zugrunde liegenden Aufgaben werden durch eine elektrische Maschine gemäß dem Patentanspruch 1 gelöst. Die auf die Montage bezogene Aufgabe wird gelöst durch ein Herstellungsverfahren gemäß Patentanspruch 10. Vorteile und Ausgestaltungen der Erfindung, die einzeln oder in Kombination miteinander einsetzbar sind, sind Gegenstand der Unteransprüche.

### Beschreibung der Erfindung

Die erfindungsgemäße elektrische Maschine, insbesondere eine Drehstromasynchron- oder Drehstromsynchronmaschine, befindet sich in einem Gehäuse und umfasst einen Stator mit Wicklungsleitungen, deren Leitungsenden Steckkontaktiereinheiten aufweisen. Sie umfasst eine gehäuseintegrierte Umrichtereinheit, insbesondere eine lagerschildintegrierte Umrichtereinheit, welche über Steckkontaktiergegenstücke verfügt. Ein Anschlussring ist in axialer Richtung zwischen dem Stator mit Wicklung und der gehäuseintegrierten Umrichtereinheit montiert. Dieser Anschlussring enthält Fixierungsgeometrien für die Steckkontaktiereinheiten, wodurch diese fixiert und mit den Steckkontaktiergegenstücken elektrisch leitend verbunden sind.

Bevorzugt werden in der erfindungsgemäßen elektrischen Maschine Steckkontakte anstelle von Klemmen verwendet. Von besonderem Vorteil ist der Einsatz des Anschlussrings, der zur Fixierung der Steckkontakte dient. Die Maschine umfasst eine integrierte Umrichterlösung, welche zusammen mit dem Anschlussring und dem Stator für hohe Kompaktheit sorgt. Ein Teil der vorgeschlagenen Lösung besteht darin, die Leistungselektronik in das Gehäuse, insbesondere in das Lagerschild zu integrieren. Eine besondere Herausforderung stellt dabei der begrenzte Bauraum und die runde Ausführung der Umrichterlösung dar.

Die Vorteile liegen also zum einen in der baulichen Flexibilität. Durch die Verwendung von Steckkontakten anstelle von Klemmen ist ein sehr einfaches Zusammenfügen des Stators und des Umrichters im Gehäuseraum möglich. Zudem liegt ein Vorteil in der Stabilität. Die Fügeeigenschaften der Stator- sowie der Umrichtereinheit können optimiert werden. Der Anschlussring ermöglicht eine Reduzierung auf im Wesentlichen diese drei baulichen Komponenten innerhalb des Gehäuses.

Unter Steckkontaktiereinheit und Steckkontaktiergegenstück werden insbesondere Stecker und Buchsen verstanden, wobei Stecker und Buchse auch vertauscht sein können. Stator-Leitungsenden können in Stecker münden und die Buchsen können in der Umrichtereinheit integriert sein oder umgekehrt. Alternativ können anstelle von Steckkontakten auch Federkontakte eingesetzt werden.

Unter einer gehäuseintegrierten Umrichtereinheit ist zu verstehen, dass der Umrichter oder einzelne Komponenten des Umrichters innerhalb des Gehäuses angeordnet ist. Dies bewirkt, dass die elektrische Anbindung auch innerhalb des Gehäuses erfolgt und nicht aus dem Gehäuse herausgeführt wird. Es könnte auch von (Motor)innenraum-positionierter Umrichtereinheit gesprochen werden. Um eine Umrichtereinheit im Gehäuse zu integrieren, kann diese insbesondere an der Gehäuserauminnenwand befestigt sein. Besonders vorteilhaft ist eine lagerschildintegrierte Umrichtereinheit, wie sie beispielsweise in der EP 24199792.3 oder in der EP 24200040.4 vorgeschlagen werden. Auch eine kombinierte Lösung, bei der die Umrichtereinheit teilweise im Gehäuse und teilweise im Lagerschild integriert ist, ist denkbar. Derartige Ausführungsformen einer gehäuseintegrierten Umrichtereinheit können als Ausgangsbasis für die hier vorgeschlagene Anschlussring-Lösung herangezogen werden.

Unter einem Gehäuse ist die Umbauung der elektrischen Maschine zu verstehen, welche insbesondere Kühlelemente, Befestigungselemente und die Herausführung der Energieleitungen bereitstellt.

Eine weiterer Vorteil ist eine Lösung für die Herausforderung der Bauraumnutzung anzugeben. Besonders bevorzugt sind runde Umrichterausführungen. Bevorzugte Durchmesser richten sich nach dem Statordurchmesser. Dieser kann insbesondere bei circa 10 cm bis 15 cm liegen. Die vorgeschlagene Lösung kann auch für andere Leistungsklassen interessant sein. Insbesondere wird die vorgeschlagene Lösung in Drehstromasynchron- oder Drehstromsynchronmaschinen mit
1 kW bis 15 kW Leistung und Achshöhen von 80 mm bis 160 mm eingesetzt. Auch in Motoren mit bis zu 90 kW Leistung und Achshöhen bis zu 280 mm, kann die Lösung Anwendung finden.

Vorteilhafte Anwendung der Erfindung ist beispielsweise möglich in einem Antrieb, mit mindestens einer dynamoelektrischen rotatorischen Maschine, die in einem Gehäuse angeordnet ist, mit einem in einem Stator angeordneten Wicklungssystem und einem durch einen Luftspalt davon getrennten Rotor, der über mindestens ein Lager eines topfähnlichen Lagerschilds um eine Achse drehbar gelagert ist. Stator und Rotor befinden sich in einem Motorinnenraum. Dazu umfasst ist bevorzugt ein Umrichter, der mindestens einige der folgenden Bauelemente wie Leistungshalbleiter, Drosseln, Kondensatoren, Steuer- und Regeleinheiten sowie Kommunikationseinheiten aufweist und sich in einem Umrichterbauraum befindet, der zumindest abschnittsweise von dem Lagerschild radial umgeben ist. Einige Bauelemente des Umrichters sind mit dem Lagerschild thermisch leitend verbunden, indem insbesondere wärmeintensive Bauelemente des Umrichters an einer inneren Seitenwand des topfähnlichen Lagerschilds angeordnet sind. Bevorzugt ist der Umrichter axial betrachtet zwischen der dynamoelektrischen rotatorischen Maschine und dem Lager des topfähnlichen Lagerschilds angeordnet. Motorinnenraum und Umrichterbauraum sind insbesondere durch ein Abschirmelement getrennt.

In einer vorteilhaften Ausführungsform der erfindungsgemäßen elektrischen Maschine ist der Stator in das Gehäuse eingefügt oder eingepresst. Dies hat den Vorteil, dass eine entsprechende Einpassung des Stators in das Gehäuse geschaffen ist, welche einen vergleichsweise guten Wärmeübergang vom Blechpaket des Stators auf das Gehäuse und optionale Gehäuserippen schafft.

In einer weiteren vorteilhaften Ausführungsform der erfindungsgemäßen elektrischen Maschine weisen die Steckkontaktiereinheiten Buchsen, insbesondere Kunststoffbuchsen, auf, während die Steckkontaktiergegenstücke Pins, insbesondere Kupferpins, aufweisen. Alternativ können die Steckkontaktiereinheiten Pins, insbesondere Kupferpins, und die Steckkontaktiergegenstücke Buchsen, insbesondere Kunststoffbuchsen, aufweisen.

Die Statorleitungsenden sind also nicht mit den üblichen Kontaktiermaterialien ausgestattet. Die Kontaktierung in der Buchse selbst kann aber bevorzugt über die üblichen Technologien wie Crimpen, Stecken, CageClamp oder andere erfolgen.

In einer weiteren vorteilhaften Ausführungsform der erfindungsgemäßen elektrischen Maschine weisen weitere Leitungsenden Steckkontaktiereinheiten auf, insbesondere Leitungsenden von Thermofühlern und/oder Anbauelementen, welche dann insbesondere ebenso im Anschlussring befestigt sind und für eine Steckkontaktierung zugänglich sind.

In einer weiteren vorteilhaften Ausführungsform der erfindungsgemäßen elektrischen Maschine ist der Anschlussring in das Gehäuse eingefügt oder eingepresst. Der Presssitz ist von besonderem Vorteil für die Stabilität. Die Komponenten sind bevorzugt in ihren Elastizitätseigenschaften optimiert.

In einer weiteren vorteilhaften Ausführungsform der erfindungsgemäßen elektrischen Maschine sind Fixierungsgeometrien für die Steckkontaktiereinheiten als Aufnahmen, insbesondere Ausnehmungen oder Ausbuchtungen im Anschlussring, ausgestaltet, in welchen die Steckkontaktiereinheiten eingeschoben sind. Alternativ können die Fixierungsgeometrien für die Steckkontaktiereinheiten als Auswölbungen, insbesondere Nasen, ausgestaltet sein, auf welche die Steckkontaktiereinheiten aufgeschoben oder aufgepresst sind. Dadurch werden Montage und Kontaktierung vorteilhaft kombiniert.

In einer weiteren vorteilhaften Ausführungsform der erfindungsgemäßen elektrischen Maschine umfasst der Anschlussring Metall oder Kunststoff. Vorteile, die sich aus einem aus Metall gefertigten Anschlussring ergeben, sind beispielsweise die gute thermische Leitfähigkeit und die hohe mechanische Stabilität. Zudem weist ein metallischer Anschlussring eine höhere thermische Stabilität und insgesamt höhere mechanische Festigkeit auf. Dies wirkt sich zudem positiv auf eine erhöhte Lebensdauer aus. Auch bezüglich Brennbarkeit (Zertifizierung) und EMV-Verträglichkeit (Abschirmung) ist ein metallischer Anschlussring von Vorteil.

Vorteile, die sich aus einem aus Kunststoff gefertigten Anschlussring ergeben, sind beispielsweise die erfolgte thermische Trennung sowie elektrische Isolierung, die hohe Formgenauigkeit und die dadurch ermöglichte Bauteilgestaltung. Durch die Isolationseigenschaften muss keine elektrische Isolation zu den spannungsführenden Teilen zusätzlich gewährleistet sein. Die Bauteilgestaltung mittels Kunststoffmaterialien ist einfacher und es sind filigranere Geometrien möglich, zum Beispiels Schnappgeometrien. Zudem reduziert sich der Herstellungsaufwand und die Herstellung wird somit günstiger.

In einer weiteren vorteilhaften Ausführungsform der erfindungsgemäßen elektrischen Maschine sind die Fixierungsgeometrien radial auf dem Anschlussring angeordnet.

In einer weiteren vorteilhaften Ausführungsform der erfindungsgemäßen elektrischen Maschine ist die Umrichtereinheit mittels des Zusammenfügens von Steckkontaktiereinheiten und Stecckontaktiergegenstücken kraftschlüssig mit dem im Gehäuse eingefügten oder eingepressten Stator verbunden, wodurch zusätzlich die Stabilität erhöht wird.

Zweckdienlicherweise sind also Steckkontaktiereinheiten, Steckkontaktiergegenstücke und Fixierungsgeometrien in Position und insbesondere auch Anzahl identisch, insbesondere in ihrer Position bezüglich radialer Entfernung von der Rotationsachse sowie in ihrer konzentrischen Anordnung.

Hat der Umrichter seine Endposition erreicht, stecken alle Buchsen und Stecker von Stator und Umrichter ineinander. Der Stator ist somit vollständig mit dem Umrichter montiert.

Besonders vorteilhaft ist die Kontaktfläche der Buchse mit dem Stecker entsprechend ausgelegt, dass mögliche Relativbewegungen von Stator und Umrichter ausgeglichen werden können, die Kontaktierung also nicht abbricht.

Das erfindungsgemäße Herstellungsverfahren für eine elektrische Maschine umfasst die folgenden Montageschritte: Anbringen von Steckkontaktiereinheiten an den Leitungsenden der Wicklungsleitungen eines Stators, axiales Einfügen oder Einpressen des Stators in ein Gehäuse, axiales Einfügen oder Einpressen eines Anschlussrings mit Fixierungsgeometrien in das Gehäuse, Anbringen der Steckkontaktiereinheiten an oder in den Fixierungsgeometrien, axiales Einschieben einer Umrichtereinheit mit Steckkontaktiergegenstücken in das Gehäuse bis zu einer Endposition der Umrichtereinheit, in welcher Endposition Steckkontaktiereinheiten und Steckkontaktiergegenstücke so zusammengefügt sind, dass Stator und Umrichtereinheit kontaktiert sind.

Ein Vorteil liegt darin, dass die axiale Montage des Umrichters in das Gehäuse zugleich zur Kontaktierung genutzt wird. Ein weiterer Vorteil besteht darin, dass bewährte Montageverfahren wie das Einpressen oder Einfügen verwendet werden können. Damit bleiben etablierte Abläufe erhalten. Des Weiteren wird die Komponentenanzahl reduziert.

Das Einpressen hat noch den zusätzlichen Vorteil für eine sehr gute Wärmeanbindung ans Gehäuse zu sorgen. Darüber hinaus sind alle vorgeschlagenen Montage- beziehungsweise Fixierungsmechanismen mechanischer Art. Die Meisten davon stellen lösbare Verbindungen dar, die vorteilhaft für Reparatur und Rückbau sind.

In einer vorteilhaften Variante des erfindungsgemäßen Herstellungsverfahrens erfolgt das Anbringen von Steckkontaktiereinheiten an den Leitungsenden der Wicklungsleitungen eines Stators mittels Crimpen, Stecken oder CageClamp. Die Statorleitungsenden sind also nicht mit den üblichen Kontaktiermaterialien ausgestattet, zum Beispiel Kabelschuh, Aderendhülse, sondern sind an eine Buchse, bevorzugt an eine Kunststoffbuchse kontaktiert. Die Kontaktierung in der Buchse selbst kann über die üblichen Technologien wie Crimpen, Stecken, oder CageClamp erfolgen.

In einer weiteren vorteilhaften Variante des erfindungsgemäßen Herstellungsverfahrens erfolgt zusätzlich der Montageschritt des Anbringens von Steckkontaktiereinheiten an weiteren Leitungsenden des Stators, insbesondere an Leitungsenden von Thermofühlern und/oder Anbauelementen.

In einer weiteren vorteilhaften Variante des erfindungsgemäßen Herstellungsverfahrens werden die Fixierungsgeometrien für die Steckkontaktiereinheiten als Aufnahmen, insbesondere Ausnehmungen oder Ausbuchtungen im Anschlussring, ausgestaltet, in welche die Steckkontaktiereinheiten eingeschoben werden. Dies erleichtert die Montage und erhöht die Stabilität, insbesondere was die Langlebigkeit der Kontakte angeht.

In einer weiteren vorteilhaften Variante des erfindungsgemäßen Herstellungsverfahrens sind die Fixierungsgeometrien für die Steckkontaktiereinheiten als Auswölbungen, insbesondere Nasen, ausgestaltet, auf welche die Steckkontaktiereinheiten aufgeschoben oder aufgepresst werden. Dies ist eine Ergänzung oder Alternative zu den Aufnahmen und erleichtert ebenfalls die Montage und erhöht die Stabilität, insbesondere was die Langlebigkeit der Kontakte angeht.

In einer weiteren vorteilhaften Variante des erfindungsgemäßen Herstellungsverfahrens erfolgt wenigstens einer der Montageschritte halbautomatisiert oder automatisiert. Ein wichtiger Vorteil des vorgeschlagenen Montageverfahrens liegt in der Zusammenführung von Kontaktierung und Montage in einem einzigen Prozessschritt. Durch das Einfügen des Umrichters in das Gehäuse wird die Kontaktierung automatisch hergestellt. Der Aufwand zum Vorbereiten der Leitungsenden des Stators bleibt nahezu identisch, da anstelle von Kabelschuhen nun Buchsen oder Stecker angebracht werden. Des Weiteren ist eine Kontaktierung der Statorleitungen und Umrichteranschlüsse im Klemmbrett nicht mehr erforderlich. Auch die Durchführung der Statorleitungen durch die Gehäuseöffnung entfällt, was zu einer erheblichen Reduzierung des Bauraums im Anschlussbereich führt. Das sehr große Klemmbrett mit einer Vielzahl an Anschlüssen reduziert sich auf die drei Anschlüsse der Energiezuleitung und eventuell Schnittstellenanschlüsse. Dadurch können Kosten für zusätzliche Komponenten wie einem Hilfsklemmkasten und dessen Montage eingespart werden. Zusammengefasst: Die Vorteile der vorgeschlagenen Lösung umfassen die Kontaktierung und Montage in einem Prozessschritt, was zu einer Kostenreduktion durch weniger Prozessschritte führt. Auch die Anzahl der benötigten Anbauteile, wie beispielsweise ein Hilfsklemmbrett, wird reduziert. Zudem verringert sich das manuelle Handling der Leitungen, wie Kabeldurchführung und Anschlussarbeiten im Klemmkasten.

### Figurenbeschreibung:

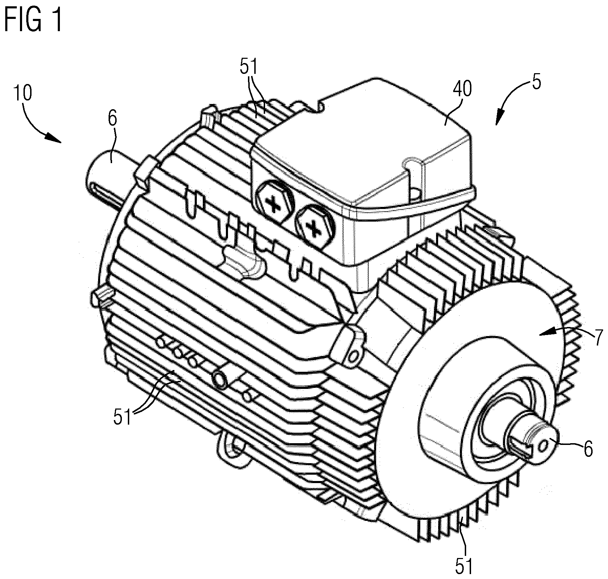

Beispiele und Ausführungsformen der vorliegenden Erfindung werden noch in exemplarischer Weise mit Bezug auf die Figuren 1 bis 4 der angehängten Zeichnung beschrieben. In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein.

Obwohl die Erfindung im Detail durch das bevorzugte Ausführungsbeispiel näher illustriert und beschrieben wird, ist sie nicht durch die offenbarten Beispiele eingeschränkt. Variationen hiervon können vom Fachmann abgeleitet werden, ohne den Schutzumfang der Erfindung, wie er durch die Patentansprüche definiert wird, zu verlassen.
- Figur 1: zeigt schematisch eine elektrische Maschine 10, insbesondere einen Motor, mit motormontierten Umrichter in einem Klemmenkasten 40,
- Figur 2: eine Kontaktierung, gemäß Stand der Technik, einer Energieleitung, von Signal- und Umrichteranschlüssen auf einem Klemmbrett auf einem Gehäuse 5,
- Figur 3: einen Schnitt durch eine erfindungsgemäße elektrische Maschine 10, in der eine gehäuseintegrierte Umrichtereinheit 3 mittels eines Anschlussrings 1 die Statorleitungen 22 kontaktiert und
- Figur 4: eine teilperspektivische Darstellung der Komponenten Stator 2, Umrichtereinheit 3 und Anschlussring 1 entlang ihrer Montageachse.

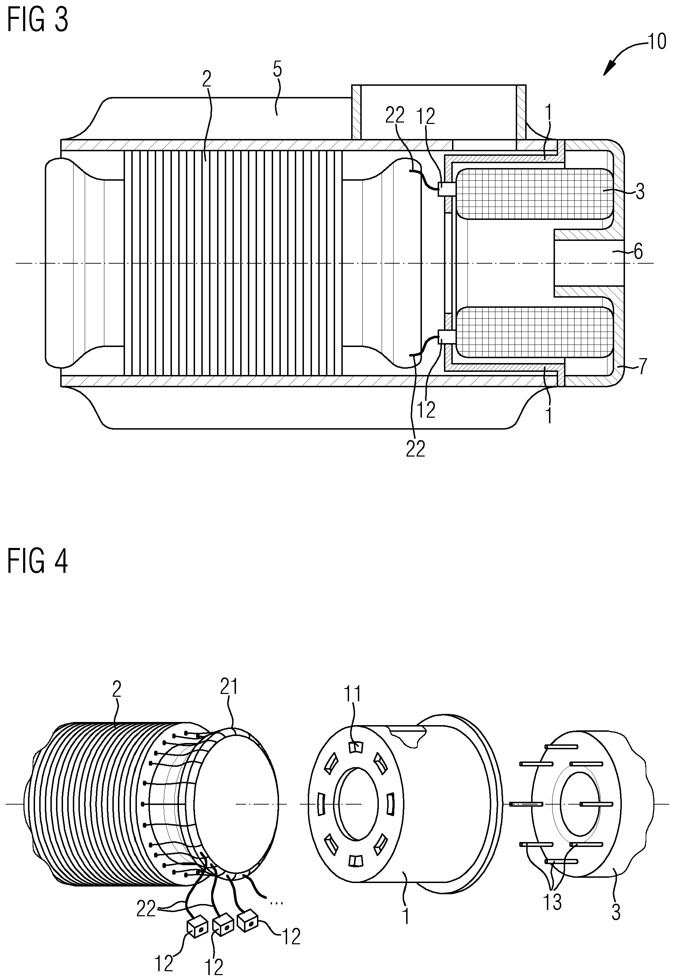

In der Figur 1 ist zunächst eine perspektivische Darstellung der Außenansicht einer elektrischen Maschine 10 in einem Gehäuse 5 gezeigt, mit einer Lageraufnahme am Boden des Lagerschildes 7. Beidseitig ragt die Welle 6 aus dem Gehäuse 5. Auf der Stator-Seite, vergleiche Figur 3, wird die Arbeitsmaschine, wie z.B. ein Kompressor oder eine Pumpe an die Welle 6 angeschlossen. Auf der Seite des Lagerschildes 7 sind modulartige Anbauten wie eine Bremseinheit, Fremdlüftermodul, oder ein Geber bzw. Drehimpulsgeber anbringbar. Es sind Kühlrippen 51 an der Gehäuseaußenwand gezeigt. Der Klemmenkasten 40 ist kleiner dimensioniert dargestellt, als für bisher übliche Klemmbretter notwendig, vergleiche Figur 2. Der Klemmenkasten 40 ist durch Einsatz der erfindungsgemäß vorgeschlagenen Lösung noch weiter verkleinerbar bis hin zu gar nicht mehr von Bedarf.

Für den elektrischen Anschluss von elektrischen Maschinen 10, beispielsweise Elektromotoren werden an die Enden der Wicklungsphasen Anschlussleitungen 22 elektrisch kontaktiert. Besonders interessant ist die vorgeschlagene Lösung für Drehstromasynchron -bzw. Drehstromsynchronmotoren. Die Kontaktierung erfolgt über Verfahren wie z.B. crimpen, löten oder schweißen. An den Enden der Anschlussleitungen 22 befinden sich üblicherweise Kabelschuhe. Diese Leitungen werden bisher händisch durch eine Gehäuseöffnung üblicherweise auf das Klemmenbrett im Anschlusskasten 40 geführt, um die Anschlüsse dem Kunden benutzerfreundlich bereit zu stellen. Bei dezentralen, sogenannten wandmontierten Umrichter-Ausführungen erfolgt der Anschluss zwischen Umrichter 3 und Stator 2 über eine Zuleitung zum Klemmenbrett. Bei integrierten, sogenannten aufgesetzten bzw. motormontierten Umrichter-Ausführungen, wie beispielsweise in Figur 2 gezeigt, werden bisher die Anschlussleitungen 41 durch die Gehäuseöffnung direkt zum Umrichter 3geführt. Die Anschlussleitungen für die Netzspannung 41 sind dabei üblicherweise mit Aderendhülsen ausgeführt, die Kontaktierung erfolgt mittels Lüsterklemmen oder Cage-Clamp-Kontakten.

Zusätzlich zu den Spannungsanschlussleitungen 41 gibt es optional die Möglichkeit weiterer Leitungen 46, 47, zum Beispiel für die thermische Motorüberwachung 46 oder andere Einbauteile, wie z.B. eine Stillstandsheizung, welche ebenfalls händisch durch die Gehäuseöffnung in den Anschlusskasten 40 bzw. direkt in den motormontierten Umrichter 3 geführt werden können. Im Anschlusskasten 40 erfolgen Anschlüsse üblicherweise auf Lüsterklemme. Des Weiteren sind in Figur 2 Anschlüsse für den Motor 42, Anschlüsse für Digitaleingänge und -ausgänge 43, Anschlüsse für eine 24Volt-Netzteil 44, geschaltet/ungeschaltet, Anschlüsse für DIP-Schalter 45 (Dual In-line Package Schalter), Anschlüsse für Motortemperatursensor 46, Anschlüsse für eine Bremswiderstandsmessung 47 sowie Anschlüsse für eine EM-Bremse, zum Beispiel 180 V, gezeigt. Die vorgeschlagene Lösung vermeidet vorteilhaft den bisher großen manuellen Aufwand, die Ständerleitungen 21 und zusätzliche Leitungen von der Wicklung durch die Gehäuseöffnung zu führen, und reduziert demnach, besonders bei kleineren Baugrößen, die bislang unverhältnismäßig hohen Montagekosten.

Anders als bei bisherigen sogenannten integrierten Umrichterausführungen, welche tatsächlich aber montierte oder aufgesetzte Umrichterlösung sind, vergleiche Figur 2, ist die hier vorgeschlagene gehäuseintegrierte Umrichtereinheit 3 auch tatsächlich im Gehäuse 5 integriert, siehe Figuren 3 und 4. Insbesondere ist die gehäuseintegrierte Umrichtereinheit 3 radial um die Welle 6 herum angeordnet und direkt an die Statorleitungen 22 anschließbar.

Es ist gezeigt, dass Stator 2, Wickelkopf 21 und Umrichter 3 axial hintereinander angeordnet sind. In der in Figur 3 gezeigten Ausführung ist eine Verschaltung beziehungsweise Kontaktierung der Statorleitungen 22 an ein Klemmbrett nicht notwendig.

Die Figur 3 zeigt schematisch im Querschnitt einen Stator 2 mit montierten Steckkontaktiereinheiten 12 im Gehäuse 5, den Anschlussring 1 und den damit justierten und kontaktierten Umrichter 3. Die Steckkontaktiergegenstücke 13 sind mit den Steckkontaktiereinheiten 12 zusammengefügt.

Figur 4 zeigt eine Skizze des Stators 2 mit montierten Steckkontakteinheiten 12, hier Buchsen 12, sowie den Anschlussring 1 und die Umrichtereinheit 3 mit Steckkontaktgegenstücken 13, hier Pins 13, entlang ihrer Montageachse. Die axiale Montage des Umrichters 13 in das Gehäuse 5 wird so zur Kontaktierung genutzt. Zunächst wird der Stator 2 bevorzugt konventionell in das Gehäuse 5 eingefügt oder eingepresst. Die Enden der Statorleitungen 22 sind jedoch nicht mit den üblichen Kontaktmaterialien wie Kabelschuhen oder Aderendhülsen ausgestattet, sondern sind an eine Kunststoffbuchse 12 kontaktiert. Ebenso sind weitere Kabelenden, beispielsweise von Thermofühlern oder Anbauelementen, mit diesen Kunststoffbuchsen 12 kontaktiert. Die Kontaktierung in der Buchse 12 selbst kann über übliche Technologien wie Crimpen, Stecken oder CageClamp erfolgen.

Um die Kunststoffbuchsen 12 oder Stecker der Statoranschlüsse im Motorinnenraum zu fixieren, wird der Anschlussring 1, ein zusätzliches Bauelement in Ringform, wie in Figur 4 verdeutlicht, in das Gehäuse 5 eingelegt oder eingepresst. Dieser Anschlussring 1 kann aus Metall oder Kunststoff gefertigt sein und ist mit Fixierungsgeometrien 11 wie Nasen zum Aufschieben oder Einpressen oder Ausbuchtungen zum Einstecken der Steckkontaktiereinheiten 12 ausgestattet. Dadurch können diese radial auf dem Anschlussring 1 angebracht werden. Die Montage der Steckkontaktiereinheiten 12 auf die Fixiergeometrien 11 des Anschlussrings 1 erfolgt in der Regel manuell, ist aber auch automatisiert realisierbar. Zudem könnte der Anschlussring 1 im Vorfeld mit den Statorendbuchsen oder -steckern 12 bestückt werden. In diesem Fall ist eine zusätzliche Fixierung des Rings 1 mit dem Gehäuse 5 vorgesehen, da ein Presssitz dann nicht möglich wäre.

In einem weiteren Schritt wird der Umrichter 3 in das Gehäuse 5 montiert, indem er axial eingeschoben wird. Im Design des Umrichters 3 befinden sich entsprechende Steckereinheiten 13, wie in Figur 4 gezeigt. Diese Stecker 13 sind in Position und Anzahl identisch zu den montierten Buchsen 12 des Stators 2. Wenn der Umrichter 3 seine Endposition erreicht hat, stecken alle Buchsen 12 und Stecker 13 von Stator 2 und Umrichter 3 ineinander, wodurch der Stator 2 vollständig mit dem Umrichter 3 montiert ist. Die Kontaktfläche der Buchse 12 mit dem Stecker 13 ist entsprechend ausgelegt, Relativbewegungen von Stator 2 und Umrichter 3 auszugleichen, zum Beispiel bei Vibrationen. Dies hat den Vorteil, dass die Kontaktierung nicht unterbrochen wird. Die Stecker 13 auf dem Umrichter 3 können sowohl auf der Stirnseite des Umrichters 3 angebracht als auch im Design integriert sein. Es ist auch möglich, dass Stecker 12 und Buchse 13 vertauscht sind, sodass die Steckkontakiereinheiten 12 als Stecker ausgestaltet sind und die Steckkontaktiergegenstücke 13 als Buchsen im Umrichter 3 integriert sind.

Der wesentliche Vorteil der vorgeschlagenen Lösung liegt in der Zusammenführung von Kontaktierung und Verdrahtung der Stator- und Umrichteranschlüsse in einem einzigen Prozessschritt. Mittels des Anschlussrings 1 und der Ausgestaltung von Stator 2 und Umrichtereinheit 3 wird beim Einfügen des Umrichters 3 in das Gehäuse 5 die Kontaktierung automatisch hergestellt, sodass ein Anschluss des Umrichters 3 außerhalb des Motorraums 5 nicht mehr erforderlich ist. Kundenseitig müssen lediglich die drei Energieleitungen 41 sowie nach Anwendung Signal- und/oder Steuerleitungen angeschlossen werden. Der Aufwand zum Anschluss der Stecckontaktiereinheiten 12 an den Stator 2 ist dabei nahezu identisch mit dem Standardprozess, bei dem Leitungen angeklemmt oder Kabelschuhe angebracht werden.

Ein weiterer Vorteil besteht darin, dass die Herausführung der Statorleitungen 22 aus dem Gehäuse heraus entfällt, was zu einer erheblichen Reduzierung des Bauraums im Anschlussbereich führt. Dadurch können Kosten für zusätzliche Komponenten wie einen Hilfsklemmkasten und dessen Montage eingespart werden. Zusammengefasst bietet die vorgeschlagene Lösung Vorteile bei der Kontaktierung und Montage, da diese in einem einzigen Prozessschritt erfolgen. Die Lösung bewirkt eine Kostenreduktion durch die Verringerung der Prozessschritte. Zusätzliche Anbauteile, wie beispielsweise ein Hilfsklemmbrett, entfallen, was weitere Kosten spart. Das manuelle Handling der Leitungen, wie Kabeldurchführung und Anschlussarbeiten im Klemmkasten, wird reduziert. Für den Kunden wird der Anschluss einfacher und schneller.

Vorgeschlagen wird also eine elektrische Maschine 10, insbesondere eine Drehstromasynchron- oder eine Drehstromsynchronmaschine, und ein Verfahren zur Montage einer elektrischen Maschine 10. Diese Maschine umfasst einen Stator 2 mit Wicklungsleitungen 22, deren Leitungsenden in Steckkontaktiereinheiten 12 münden, die in einem Anschlussring 1 fixiert sind. Darüber hinaus beinhaltet die Maschine eine gehäuseintegrierte Umrichtereinheit 3, insbesondere eine im Lagerschild integrierte Umrichtereinheit 3, die entsprechende Steckkontaktiergegenstücke 13 aufweist. Es wird ein Herstellungsverfahren für diese elektrische Maschine 10 angegeben, in dem zunächst die Leitungsenden der Wicklungsleitungen 22 des Stators 2 an die Steckkontaktiereinheiten 12 angebracht werden und diese wiederum im Anschlussring 1 fixiert werden. Anschließend wird der Stator 2 mit dem Anschlussring 1 axial in das Gehäuse 5 eingefügt oder eingepresst. Alternativ werden die Steckkontaktiereinheiten 12 nach dem Einfügen oder Einpressen des Anschlussrings 1 an diesen angebracht. Danach wird die Umrichtereinheit 3 mit den Steckkontaktiergegenstücken 13 axial in das Gehäuse 5 eingeschoben, bis eine Endposition erreicht ist, in der die Steckkontaktiereinheiten 12 und die Steckkontaktiergegenstücke 13 so zusammengefügt sind, dass der Stator 2 und die Umrichtereinheit 3 kontaktiert sind.

### Bezugszeichenliste

- 10: elektrische Maschine
- 1: Anschlussring
- 11: Fixierungsgeometrie, insbesondere Aufnahme für Steckkontaktiereinheit
- 12: Steckkontaktiereinheit
- 2: Stator
- 21: Wicklungssystem, Statorwickelkopf
- 22: Statorleitungen
- 3: Umrichtereinheit
- 13: Steckkontakte (Pins)
- 5: (Motor)gehäuse
- 51: Kühlrippen
- 6: Welle
- 7: Lagerschild
- 40: Klemmenkasten
- 41: Anschlüsse Netzspannung
- 42: Anschlüsse Motor
- 43: Anschlüsse Digitaleingänge/-ausgänge
- 44: Anschlüsse Netzteil
- 45: DIP-Schalter
- 46: Anschlüsse Temperatursensor
- 47: Anschlüsse Bremswiderstand
- 48: Anschlüsse EM-Bremse

## Patentansprüche

1. Elektrische Maschine (10), insbesondere Drehstromasynchron- oder Drehstromsynchronmaschine, in einem Gehäuse (5) umfassend
einen Stator (2) umfassend Wicklungsleitungen (22), deren Leitungsenden Steckkontaktiereinheiten (12) aufweisen,
eine gehäuseintegrierte Umrichtereinheit (3), insbesondere eine lagerschildintegrierte Umrichtereinheit (3), welche Steckkontaktiergegenstücke (13) aufweist, und umfassend einen Anschlussring (1), welcher in axialer Richtung zwischen dem Stator (2) mit Wicklung und der gehäuseintegrierten Umrichtereinheit (13) montiert ist, und welcher Anschlussring (1) Fixierungsgeometrien (11) für die Steckkontaktiereinheiten (12) aufweist, mittels welcher die Stecckontaktiereinheiten (12) fixiert sind, und mit den Steckkontaktiergegenstücken (13) elektrisch leitend verbunden sind.

2. Elektrische Maschine (10) nach Anspruch 1, wobei der Stator (2) in das Gehäuse (5) eingefügt oder eingepresst ist.

3. Elektrische Maschine (10) nach Anspruch 1 oder 2, wobei die Steckkontaktiereinheiten (12) Buchsen, insbesondere Kunststoffbuchsen aufweisen und die Steckkontaktiergegenstücke (13) Pins, insbesondere Kupferpins aufweisen oder die Steckkontaktiereinheiten (12) Pins, insbesondere Kupferpins aufweisen und die Steckkontaktiergegenstücke (13) Buchsen, insbesondere Kunststoffbuchsen aufweisen.

4. Elektrische Maschine (10) nach einem der vorstehenden Ansprüche, wobei weitere Leitungsenden Steckkontaktiereinheiten (12) aufweisen, insbesondere Leitungsenden von Thermofühlern und/oder Anbauelementen.

5. Elektrische Maschine (10) nach einem der vorstehenden Ansprüche, wobei der Anschlussring (1) in das Gehäuse (5) eingefügt oder eingepresst ist.

6. Elektrische Maschine (10) nach einem der vorstehenden Ansprüche, wobei Fixierungsgeometrien (11) für die Steckkontaktiereinheiten (12) als Aufnahmen, insbesondere Ausnehmungen oder Ausbuchtungen im Anschlussring (1) ausgestaltet sind, in welchen die Steckkontaktiereinheiten (12) eingeschoben sind und/oder wobei die Fixierungsgeometrien (11) für die Steckkontaktiereinheiten (12) als Auswölbungen, insbesondere Nasen, ausgestaltet sind, auf welche die Steckkontaktiereinheiten (12) aufgeschoben oder aufgepresst sind.

7. Elektrische Maschine (10) nach einem der vorstehenden Ansprüche, wobei der Anschlussring (1) Metall oder Kunststoff umfasst.

8. Elektrische Maschine (10) nach einem der vorstehenden Ansprüche, wobei die Fixierungsgeometrien (11) radial auf dem Anschlussring (1) angeordnet sind.

9. Elektrische Maschine (10) nach einem der vorstehenden Ansprüche, wobei die Umrichtereinheit (3) mittels des Zusammenfügens von Steckkontaktiereinheiten (12) und Steckkontaktiergegenstücken (13) kraftschlüssig mit dem im Gehäuse (5) eingefügten oder eingepressten Stator (2) verbunden ist.

10. Herstellungsverfahren für eine elektrische Maschine (10) nach einem der vorstehenden Ansprüche, umfassend die Montageschritte:
- Anbringen von Steckkontaktiereinheiten (12) an den Leitungsenden der Wicklungsleitungen (22) eines Stators (2),
- Axiales Einfügen oder Einpressen des Stators (2) in ein Gehäuse (5),
- Axiales Einfügen oder Einpressen eines Anschlussrings (1) mit Fixierungsgeometrien (11) in das Gehäuse (5),
- Anbringen der Steckkontaktiereinheiten (12) an oder in den Fixierungsgeometrien (11),
- Axiales Einschieben einer Umrichtereinheit (3) mit Steckkontaktiergegenstücken (13) in das Gehäuse (5) bis zu einer Endposition der Umrichtereinheit (3), in welcher Endposition Steckkontaktiereinheiten (12) und Steckkontaktiergegenstücken (13) so zusammengefügt sind, dass Stator (2) und Umrichtereinheit (3) kontaktiert sind.

11. Herstellungsverfahren nach Anspruch 10, wobei das Anbringen von Steckkontaktiereinheiten (12) an den Leitungsenden der Wicklungsleitungen (22) eines Stators (2) mittels Crimpen, Stecken oder CageClamp erfolgt.

12. Herstellungsverfahren nach Anspruch 10 oder 11, wobei zusätzlich der Montageschritt des Anbringens von Steckkontaktiereinheiten (12) an weiteren Leitungsenden des Stators (2) erfolgt, insbesondere an Leitungsenden von Thermofühlern und/oder Anbauelementen.

13. Herstellungsverfahren nach einem der Ansprüche 10 bis 12, wobei die Fixierungsgeometrien (11) für die Steckkontaktiereinheiten (12) als Aufnahmen, insbesondere Ausnehmungen oder Ausbuchtungen im Anschlussring (1) ausgestaltet werden, und in welche Fixierungsgeometrien (11) die Steckkontaktiereinheiten (12) eingeschoben werden.

14. Herstellungsverfahren nach einem der Ansprüche 10 bis 13, wobei die Fixierungsgeometrien (11) für die Steckkontaktiereinheiten (12) als Auswölbungen, insbesondere Nasen, ausgestaltet sind, auf welche die Steckkontaktiereinheiten (12) aufgeschoben oder aufgepresst werden.

15. Herstellungsverfahren nach einem der Ansprüche 10 bis 14, wobei wenigstens einer der Montageschritte halbautomatisiert oder automatisiert erfolgt.
